# EUROPEAN PATENT APPLICATION

(11) **EP 3 034 534 A1**
(43) Date of publication of application: **22.06.2016**
(21) Application number: 14198588.7
(22) Date of filing: 17.12.2014
(51) Int. Cl.: C08G 18/66, C08G 18/76, C08G 63/08, C08G 18/32, C08G 18/42, C09J 175/06

(54) **Substrates coated or bonded with a composition comprising a polyurethane**

(71) Applicant: PURAC Biochem BV, 4206 AC Gorinchem (NL)
(72) Inventor: Schaekens, Chris François Hubert, 4206 AC GORINCHEM (NL)
(74) Representative: De Vries & Metman

(57) **Abstract**

A coated substrate having on one surface thereof a coating composition comprising a polyurethane, said polyurethane comprising the reaction product of: i) at least one isocyanate; and, ii) a polyol which is a random copolymer comprising from 30 to 85 wt.% lactoyl units and at least one further monomer. The polyol may be further characterized by a number average molecular weight (Mn) of from 800 to 5000, preferably from 800 to 3500 g/mol.

## Description

### Field of the Invention

The present invention relates to substrate coated with a composition comprising a polyurethane. More particularly, the present invention provides a coating composition and an adhesive coating composition comprising a polyurethane derived by reacting an isocyanate with a random copolymer polyol comprising lactoyl units.

### Background to the Invention

Curable polyurethane coating and adhesive coating compositions generally comprise an isocyanate terminated urethane polymer produced by the reaction of long-chain polyols and excess polyisocyanate compounds. Active hydrogen compounds and, more usually, atmospheric moisture reacts with the isocyanate end groups in the applied coating to cause chain extension and cross-linking. As a result of the curing reaction, the polyurethane develops temperature and chemical resistance. The polyurethane will moreover demonstrate a degree of toughness and stiffness: the former is often attributed to low glass transition temperature (Tg) segments introduced into the polyurethane by the reactant polyol. Stiffness, conversely, is attributed to high Tg regions or hard segments in the polyurethane.

In addition to toughness and stiffness, a polyurethane coating composition or adhesive coating composition must exhibit acceptable green strength, open time and where applicable tack, said green strength referring to the strength of a bond after the composition sets, but before the composition is cured. A deficiency in one or more of these properties will diminish the handling characteristics of the coating composition and its utility in certain coating and assembly operations. Moreover, polyurethane coating compositions should not exhibit large changes in volume during settling, curing or upon exposure to temperature variations as this can introduce mechanical stress into the coating.

Workers in the art have sought to develop polyurethane coating compositions which demonstrate a desirable balance of processing, thermal, mechanical and, where applicable, adhesive characteristics. Certain authors have focused on the addition of modifying materials to the polyurethane coating compositions. For instance, EP-A-0 232 055, EP-A-0 1070097 and EP-A-0 246 473 describe the addition of resins and thermoplastic polymers to such coating compositions: however, the large percentages by weight of these thermoplastic resins which remain present after crosslinking of the polyurethane is considered to adversely affect shear strength of the coatings at elevated temperature.

To supplement or replace such modifying compounds, certain authors have focused on modifying the polyol from which the polyurethane is derived. US Patent. No. 6,221,978 describes a moisture curable polyurethane adhesive composition made with an epoxy resin and a polyurethane prepolymer that is substantially free of ortho-phthalic acid based polyester polyols. Conversely, US Patent Application Publication No. 2006 0205909 (O'Brien) describes a polyester polyol prepared from a composition including a phthalic acid based material containing more than 10% by weight of ortho-phahalic or derivatives thereof, an aliphatic dicarboxylic acid and a polyol. DE 199 58 526 (Henkel KGAA) describes a polyurethane adhesive derived from (A) polyester-polyols and (B) polyisocyanates, in which said polyols (A) are based on C2-C5 hydroxy-carboxylic acid(s), including lactic acid.

There remains a need in the art to provide alternative polyurethane coating compositions which do not possess the disadvantages of the prior art and which have a balance of processing, thermal and mechanical characteristics enabling their versatile utility in coating and bonding applications. There also remains a need in the art to provide an adhesive coating composition based on polyurethanes which can be effectively applied to hydrophobic substrates and, in particular, polyolefin substrates.

### Statement of Invention

In accordance with a first aspect of the present invention, there is provided a coated substrate, optionally made of a polyolefin containing material, having on one surface thereof a coating composition comprising a polyurethane, said polyurethane comprising the reaction product of: at least one isocyanate; and, a polyol which is a random copolymer comprising from 30 to 85 wt.%, by weight of the polyol, of lactoyl units and at least one further monomer. The polyol may be further characterized by a number average molecular weight (Mn) of from 800 to 5000, preferably from 800 to 3500 g/mol.

In an exemplary embodiment, the polyol comprises from 35 to 85 wt.%, preferably from 40 to 80 wt.% lactoyl units. In a further exemplary, but not mutually exclusive embodiment, the lactoyl units of said polyol are derived from optically pure lactic acid or optically pure lactide, preferably from optically pure L-lactic acid or optically pure L-lactide.

Whilst there is no intention to substantially limit the identity of the co-monomers from which the polyol is derived, good results have been obtained where said co-monomers of said polyol comprise: a dicarboxylic acid selected from the group comprising alkyl dicarboxylic acids having a total of 2 to 16 carbons atoms and aryl dicarboxylic acids having a total of from 8 to 16 carbon atoms; and, a diol having from 2 to 10 carbon atoms. Equally, effective random copolymer polyols have been obtained where said lactoyl units of said polyol are derived from lactide and said at least one further monomer is selected from the group consisting of: glycolide; ε-caprolactone; para-dioxanone; trimethylene carbonate; 1,4-dioxepan-2-one; and, 1,5 dioxepan-2-one. A preference for ε-caprolactone may be acknowledged: in particular, the polyol may be constituted by a hydroxyl terminated caprolactone-lactide copolymer.

Where the amount of lactoyl units is greater than 85 wt.%, by weight of the copolymer polyol, the resultant polyurethane is found to be extremely brittle. Conversely, where the amount of lactoyl units is less than 30 wt.%, by weight of the copolymer polyol, the resultant polyurethane is highly flexible but exhibits weak adhesion to the substrates to which it is applied.

In accordance with a second aspect of the present invention, there is provided a method of forming a coated substrate comprising: i) providing a substrate; and, ii) applying a coating composition to at least a portion of at least one surface of said substrate, wherein said coating composition comprises a polyurethane, said polyurethane comprising the reaction product of: at least one isocyanate; and, a polyol which is a random copolymer comprising from 30 to 85 wt.% lactoyl units and at least one further monomer. In an embodiment, the substrate may be provided as a sheet or film onto which at least one surface of which the coating composition is provided as a layer.

In accordance with a third aspect of the invention, there is provided a method for adhesively bonding two substrates comprising the steps of: i) providing a first substrate being a film or sheet made of a polyolefin containing material and a second substrate; ii) applying an adhesive coating composition to at least a portion of at least one surface of said first substrate and / or at least a portion of at least one surface of said second substrate; and, iii) contacting the first and second substrates under conditions suitable for forming an adhesive bond there-between, wherein said adhesive coating composition comprises a polyurethane, said polyurethane comprising the reaction product of: at least one isocyanate; and a polyol which is a random copolymer comprising from 30 to 85 wt.% lactoyl units and at least one further monomer.

The present invention also relates to an adhesive bonded article which comprises first and second substrates and which is obtained by the above captioned method. Such bonded articles may be further characterized by a lap shear strength of greater than 600 kPa as measured in accordance with ASTM D1002 (25 mm / min).

### Definitions

The term "comprising" as used herein will be understood to mean that the list following is non-exhaustive and may or may not include any other additional suitable items, for example one or more further feature (s), component (s), ingredient (s) and / or substituent (s) as appropriate.

As used herein, "and/or" refers to and encompasses any and all possible combinations of one or more of the associated listed items.

The term "lactic acid" in this application refers to 2-hydroxypropionic acid with the chemical formula C₃H₆O₃. The salt form of lactic acid is referred to as "lactate" regardless of the neutralizing agent, e.g. calcium carbonate or ammonium hydroxide. Unless specified herein, "lactic acid" can refer to either stereoisomeric form of lactic acid (L-lactic acid or D-lactic acid) and analogously "lactate" can refer to either stereoisomeric form of lactate (L-lactate or D-lactate). When referring to lactic acid production this includes the production of either a single stereoisomer of lactic acid or lactate or a mixture of both stereoisomers of lactic acid or lactate.

As used herein "lactide" (CAS 4511-42-6 and 95-96-5) refers to the cyclic diester obtained by dehydration-condensation of two lactic acid molecules.

The molecular weights referred to in this specification can be measured with gel permeation chromatography (GPC) using polystyrene calibration standards, such as is done according to ASTM 3536.

The term "polyol" as used herein shall include diols and higher functionality hydroxyl compounds.

Where mentioned, the glass transition temperature ("Tg") of a polymer or co-polymer is that temperature calculated by using the Fox equation (T. G. Fox, Bull. Am. Physics Soc., Volume 1, Issue No. 3, page 123(1956)). The glass transition temperatures of certain homo-polymers may be found in the published literature, such as in "Polymer Handbook", edited by J. Brandrup and E. H. Immergut, Interscience Publishers.

The hydroxyl (OH) values given herein are measured according to Japan Industrial Standard (JIS) K-1557, 6.4.

### Detailed Description

The compounds and methods used to form the polyurethane, the coating composition, the coated substrate and the associated bonded articles of the present invention will be described in greater detail hereinbelow.

### Preparation of the Random Copolymer Polyol

The present invention provides a random copolymer polyol which is reacted with an isocyanate to form a polyurethane, which polyurethane is in turn incorporated into a coating composition or an adhesive coating composition. The copolymer comprises from 30 to 85 wt.% lactoyl units and at least one further monomer and may be further characterized by a number average molecular weight (Mn) of from 800 to 5000, preferably from 800 to 3500 g/mol.

### Lactide

Lactide (CAS 4511-42-6 and 95-96-5) is the dimeric, cyclic ester of lactic acid which exists as three optical isomers: L-lactide formed from two L-lactic acid molecules; D-lactide formed from two D-lactic acid molecules; and, meso-lactide formed from L-lactic acid and D-lactic acid. Block A may be derived from one, two or three of said isomers.

At room temperature and pressure, lactide is a white, almost odorless, hygroscopic powder. It is however noted that the melting points of L-lactide and D-lactide are both approximately 98°C., while that of meso-lactide is approximately 40°C. Therefore, in preparations where it would be advantageous for a lactide powder to flow freely and have good workability at or near to room temperature, it is preferred for the level of meso-lactide to be as low as possible and preferably for the lactide to consist of L-lactide and / or D-lactide. In an embodiment, the lactide consists only of optically pure D-lactide or, preferably, optically pure L-lactide.

As is known in the art, lactide is usually produced by a reaction distillation method: lactic acid is subjected to dehydration condensation to obtain a polylactic acid having a relatively low molecular weight; this intermediate is then depolymerized and cyclized to form a lactide; and, this lactide is isolated as a vapor from the system of reaction. In such a production method, the lactide vapor can contain not only L-lactide and/or D-lactide and meso-lactide, but also impurities such as lactic acid monomer, linear dimeric and trimeric lactic acid polycondensates, saccharides, amino acids and fatty acids.

Various methods of purifying crude, synthesized lactide - for use in forming the random copolymer of the present polyol - are known in the art, such as recrystallization, melt-crystallization, water extraction and distillation, especially rectification. Instructive disclosures in this regard include but are not limited to: US Patent No. 6,313,319 B1; Japanese Examined Patent Publication No. 51-6673; Japanese Laid-Open Patent Publication No. 63-101378; Japanese Laid-Open Patent Publication No. 6-256340; and, Japanese Laid-Open Patent Publication No. 7-165753.

In those embodiments of the present invention where the lactyol units of the copolymer are derived from lactide, the ring opening polymerization of lactide may be performed using an appropriate ionic or nonionic catalyst, as described in Ring Opening Polymerization, Vol. I, pages 461-521, K. J. Ivin and T. Saegusa (1984). Known catalysts include but are not limited to: tin 2-ethylhexanoate (tin octanoate); tin dichloride (SnCl₂); porphyrin aluminum complexes; (n-C₄H₉O)₄Al₂O₂Zn; composite metal cyanide; aqueous diethylzinc or diethylcadmium; aluminum triisopropoxide; titanium tetrabutoxide; zirconium tetrapropoxide; tributyltin methoxide; tetraphenyltin; lead oxide; zinc stearate; bismuth 2-ethylhexanoate; potassium alcoholate; antimony fluoride; and yttrium or lanthanide series rare earth metal based catalysts (coordination catalysts) such as described in U.S. Patent No. 5,028,667. In terms of yield, tin dichloride (SnCl₂) and tin 2-ethylhexanoate are particularly preferable.

There is no particular limitation on the amount of catalyst used but it will be typically be 0.0001 to 5 parts by weight, and preferably from 0.05 to 1 part by weight, based on 100 parts by weight of the lactide.

The ring-opening polymerization reaction can be performed at room temperature, but is preferably performed with heating at a temperature of from 100 to 200° C., or from 130 to 190° C. If the temperature is lower than 100° C., the reaction rate is unfavorably low. On the other hand, if the temperature is higher than 200° C., the polymer degradation rate is increased and low-molecular weight components can vaporize.

As is known in the art, the polymerization vessel may be dried and purged with an inert gas such as nitrogen or argon - before initiating the polymerization reaction. Furthermore, the polymerization may be performed in solution or in the melt without a solvent. When used, suitable solvents for the lactide polymerization should be non-reactive, organic liquids capable of dissolving at least 1 wt.% and preferably over 10 wt.% of chain extended polymers at 25°C.

### Lactic Acid Monomer

In an alternative embodiment of the present invention, the lactoyl units of the random copolymer are derived from the polymerization of lactic acid which may be present in or isolated from a lactic acid fermentation liquor or which may be otherwise commercially available. A lactic acid fermentation liquor should not normally be used as the medium for lactic acid polymerization without first treatment of that liquor to at least remove: cells of microorganisms; organic components such as amino acids, peptides, vitamins, nucleotides, and surfactants; and, inorganic components such as the salts of phosphoric acid, sulfuric acid, acetic acid, and citric acid.

As mentioned above, it is preferred that the lactoyl units be derived from optically pure lactic acid and more particularly from optically pure L-lactic acid. Advantageously, L-lactic acid is exclusively produced by many lactic acid fermentation microorganisms. Exceptional microorganisms, such as *Lactobacillus lactis, Gactobacillus bulgaricus, and Leuconostoc cremoris,* which produce the D-form lactic acid might however be acknowledged. When employed, lactic acid in the DL-form (racemic form) can be obtained by an appropriate mixed bacterial fermentation or by racemizing L-lactic acid using microorganisms that produce lactate racemase.

The random copolymer polyol can be formed by condensation polymerization of lactic acid in the presence of a suitable initiator. Lactic acid and initiator and suitable co-monomers, as defined hereinbelow, are placed in a sufficiently dried vessel, adding a catalyst if necessary, and then subjecting the mixture to heating or heating under a reduced pressure. When water generated by polymerization is eliminated from the reaction system, the degree of polymerization of the polyester polyol can be further increased.

In the case of a solution polymerization using a solvent, the temperature of the polymerization reaction may be in the range from the azeotropic point of the solvent and generated water to the boiling point of each solvent. In order to promote the elimination of water, heating is preferably at the azeotropic point or higher - for instance from 90°C to 180° C. for a period of time that is suitable for attaining an appropriate degree of polymerization. A period of from 1 to 24 hours is usually sufficient in this regard.

Where the polymerization is conducted with heating under a reduced pressure, lactide may be produced by a de-polymerization reaction of a lactic acid oligomer in the course of the polymerization of the lactic acid. The lactide exists as impurities in the case of the polymerization of the lactic acid and is more likely to be produced where the polymerization temperature and / or the degree of vacuum are elevated. The produced lactide is lost by sublimation from the system, thereby reducing the yield of polylactic acid chains. Thus, it is preferable that heating is performed at a temperature of 100°C to 180°C. and that the pressure is reduced to 1000 to 15000 Pa (0.01 to 0.15 bar). If the pressure is more than 15000 Pa (0.15 bar), the water content in the reaction system is high, so that it is difficult for the condensation to progress. If the pressure is less than 1000 Pa (0.01 bar), lactide production and sublimation tend to occur, so that the yield of the product to be recovered is reduced.

A person of ordinary skill in the art will be aware of catalysts commonly employed in the polymerization of the lactic acid. Specific examples of such catalysts include tin dichloride (SnCl₂), tin 2-ethylhexanoate, tetraphenyltin, tin oxide, sulfuric acid, tin powder, and toluenesulfonic acid.

It is noted that polymerization can be performed without a catalyst. Whilst the polymerization reaction rate will decrease in this circumstance, this can be advantageous where the polyester polyol is to have a relatively low molecular weight.

### Co-Monomers

From 70 to 15 wt.%, more usually from 65 to 15 wt.% and preferably from 60 to 20 wt.%, by weight of the random copolymer polyol, is derived from at least one further co-monomer. Most broadly suitable co-monomers are those that provide reasonable polymerization reaction rates under suitable, pragmatic reaction conditions.

In a first exemplary embodiment, the random copolymer polyol is derived from lactide and at least one further lactone monomer. Lactones that may function as suitable co-monomers with lactide may be selected from cyclic esters having 5-, 6-, and / or 7-member rings and which thereby undergo ring-opening polymerization under the conditions as described above. Of particular utility are co-monomers selected from the group consisting of: glycolide; ε-caprolactone; para-dioxanone; trimethylene carbonate; 1,4-dioxepan-2-one; 1,5 dioxepan-2-one; and, combinations thereof.

In a second exemplary embodiment, the non-lactoyl units of the random copolymer polyol are derived from at least two co-monomers which are capable of forming an ester bond. More particularly, those co-monomers comprise: i) at least one diol; and, (ii) at least one dicarboxylic acid or its ester forming derivative.

Suitable diols (i) for use in this context include saturated and unsaturated aliphatic and cycloaliphatic dihydroxy compounds as well as aromatic dihydroxy compounds. These diols preferably have a molecular weight of 250 or less. When used herein, the term "diol" should be construed to include equivalent ester forming derivatives thereof, provided, however, that the molecular weight requirement pertains to the diol only and not to its derivative. Exemplary ester forming derivatives include the acetates of the diols as well as, for example, ethylene oxide or ethylene carbonate for ethylene glycol.

Preferred diols are those having from 2 to 10 carbon atoms. As examples of these diols there might be mentioned ethylene glycol, propylene glycol, 1,3-propane diol, 1,2-butane diol, 2-methyl propanediol, 1,3-butane diol, 1,4-butane diol, 2,3-butane diol, neopentyl glycol, hexanediol, decanediol, hexamethylene glycol and cyclohexane dimenthynol, resorcinol, and, hydroquinone. Mixtures of such diols may be employed, but in this regard, it is generally preferred that at least about 60 mole % and preferably at least 80 mol.%, based on the total diol content, be the same diol.

In a preferred embodiment, the diol is selected from ethylene glycol, propylene glycol, 1,3-propane diol, 1,2-butane diol, 1,3-butane diol, 1,4-butane diol, 2,3-butane diol, neopentyl glycol, hexamethylene glycol, cyclohexane dimenthynol and mixtures thereof. Most preferably, the diol is either ethylene glycol or neopentyl glycol.

Dicarboxylic acids (ii) which are suitable for use in the above context include aliphatic, cycloaliphatic, and/or aromatic dicarboxylic acids. These acids should preferably have molecular weight of less than 300. The term "dicarboxylic acids" as used herein includes equivalents of dicarboxylic acids having two functional carboxyl groups which perform substantially like dicarboxylic acids in reaction with glycols and diols in forming polyesters. These equivalents include esters and ester forming reactive derivatives, such as acid halides and anhydrides, provided however that the molecular weight preference mentioned above pertains to the acid and not to its equivalent ester or ester-forming derivatives. Thus, an ester of a dicarboxylic acid having a molecular weight greater than 300 or an acid equivalent of a dicarboxylic acid having a molecular weight greater than 300 are included provided the acid has a molecular weight below 300. Additionally, the dicarboxylic acids may contain any substituent groups(s) or combinations which do not substantially interfere with the polymer formation and use of the polymer of this invention.

Preferred dicarboxylic acids are those selected from the group comprising alkyl dicarboxylic acids having a total of 2 to 16 carbons atoms and aryl dicarboxylic acids having a total of from 8 to 16 carbon atoms. Representative alkyl dicarboxylic acids include glutaric acid, adipic acid, pimelic acid, succinic acid, sebacic acid, azelaic acid and malonic acid. A preference for adipic acid might be mentioned here. Representative aryl dicarboxylic acid include terephthalic, phthalic, isophthalic acids and their dimethyl derivatives.

### Supplementary Polyols

As described herein the above described random copolymer will be added to a reaction mixture comprising isocyanate to form the polyurethane. The present invention does not however preclude the polyurethane comprising units derived from further isocyanate-reactive polyols and, in particular, polyols having from 2 to 4 isocyanate-reactive hydroxyl moieties. However, when present, such additional polyols should be included in the reaction mixture only in an amount of up to 20 mol.% based on the total number of moles of polyol.

The supplementary polyol may generally be a mixture of one or more diols and / or one or more triols. And the polyols may include polyether polyols, polyester polyols, poly(alkylene carbonate)polyols, hydroxyl-containing polythioethers, amine polyols, polymer polyols, and mixtures thereof. The hydroxyl number of the polyhydroxy compounds is usually from 20 to 850 mg KOH/g and preferably from 25 to 500 mg KOH/g.

As such supplementary polyols, particular mention may be made of aliphatic, cycloaliphatic and/or araliphatic diols having from 2 to 14 and preferably from 4 to 10 carbon atoms, such as ethylene glycol, 1,3-propanediol, 1,4-butanediol, 1,6-hexanediol, 1,10-decanediol, o-, m- and p-dihydroxycyclohexane; diethylene glycol; dipropylene glycol; bis(2-hydroxyethyl)hydroquinone; and, triols, such as 1,2,4-, and 1,3,5-trihydroxycyclohexane, glycerol and trimethylolpropane. It will be recognized that such polyols may serve as starter molecules, chain extenders and / or crosslinking agents in the reaction mixture.

Where a supplementary polyol is included in the reaction mixture from which the polyurethane of the present invention is derived, the reactant polyols should have an average functionality of at least 1.5, preferably at least 1.8 and more preferably at least 2.0, but no greater than 4.0, preferably no greater than about 3.5 and more preferably no greater than 3.0. Independently or additionally, the equivalent weight of the reactant polyols should be at least 200, preferably at least 500 and more preferably at least about 1,000 but no greater than 3500, preferably no greater than 3000 and more preferably no greater than 2500.

### Isocyanates

The isocyanates used in preparing the polyurethane include any aliphatic, cycloaliphatic, arylaliphatic, heterocyclic or aromatic (poly)isocyanate, or mixture thereof, said isocyanate preferably having an average isocyanate functionality of at least 2.0 and an equivalent weight of at least 80. The isocyanate functionality of the polyisocyanate will more generally be from 2.2 to 4.0, for example from 2.3 to 3.5. Whilst functionalities greater than 4.0 may be used, their use can cause excessive crosslinking, resulting in a coating or adhesive composition which is too viscous to handle and apply easily; further, the cured coating or adhesive may be too brittle and cause foaming due to carbon dioxide de-gassing. The equivalent weight of the polyisocyanate is typically from 100 to 300, preferably from 110 to 250, and more preferably from 120 to 200.

The polyisocyanates may, where required, have been biuretized and / or isocyanurated by generally known methods, such as described in UK Patent No. 889,050.

Examples of suitable polyisocyanates include but are not limited to: ethylene diisocyanate; 1,4-tetramethylene diisocyanate; hexamethylene diisocyanate (HDI); biuret or trimers of HDI; 1,12-dodecane diisocyanate, cyclobutane-1,3-diisocyanate cyclohexane-1,3- and 1,4-diisocyanate and mixtures of these isomers; 1-isocyanato-3,3,5-trimethyl-5-isocyanato methyl cyclohexane; 2,4- and 2,6-hexahydrotolylene diisocyanate and mixtures of these isomers,; hexahydrol,3- and/or 1,4-phenylene diisocyanate; perhydro-2,5'- and/or 4,4'-diphenyl methane diisocyanate; 1,3- and 1,4-phenylene diisocyanate; 2,4- and 2,6-tolylene diisocyanate and mixtures of these isomers; diphenyl methane-2,4'- and/or 4,4'-diisocyanate (MDI); naphthylene-1,5-diisocyanate; triphenyl methane-4,4',4'-tri-isocyanate; and, polyphenyl polymethylene polyisocyanates of the type obtained by condensing aniline with formaldehyde, followed by phosgenation such as described in UK Patent Nos. 874,430 and 848,671.

Di- and / or polyisocyanates comprising ester, urea, allophanate, carbodiimide, uretdione and / or urethane groups may also be used in the process according to the invention.

In an embodiment, diphenyl methane diisocyanate (methylene diphenyl diisocynate, MDI), as polymeric or monomeric MDI, is used for the preparation of the polyurethane. Preferably that MDI is in monomeric form, with either 4,4'-MDI or mixtures of 2,4'-MDI and 4,4'-MDI being particularly preferred.

### Coating Compositions and Adhesive Coating Compositions

The above-described random copolymer polyol is reacted with at least one isocyanate, optionally in the presence of further polyols, to form a polyurethane reaction product. In general, a very slight stoichiometric excess of isocyanate (as NCO) to polyol (as OH) is used: in this context, the total molar amount of polyol(s) present in the reaction mixture will normally be sufficient to react with the majority of the isocyanate groups of the polyisocyanates but leaving enough isocyanate groups to correspond with the desired free isocyanate content of the polymer.

In an embodiment of the present invention, the polyisocyanate and polyol(s) are reacted in proportions so as to yield a polyurethane polymer characterized by an isocyanate content (i.e. %NCO) of from 0.05% to 5%, preferably from 0.1% to 2%, and most preferably from 0.1% to 1%. In addition, the ratio of isocyanate equivalents to hydroxyl equivalents, or isocyanate index, should be greater than 1 but preferably no more than 3. By maintaining the low isocyanate index, the level of free isocyanate monomer content in the final coating or adhesive composition can be reduced to less than about 4%. The presence of higher levels of free isocyanate can have a detrimental effect on the coating or adhesive formulation since it can cause toxic fumes to be released in those circumstances where the adhesive or coating is heated upon application. The higher levels of free isocyanate may also cause reduction in viscosity and poorer initial bond strength of an adhesive.

Whilst not normally practicable, the polyurethane may be titrated to measure residual concentration of isocyanate using ASTM D-2572-80 *"Standard Method for Isocyanate Group and Urethane Materials or Prepolymers"* in order to determine completion of the reaction.

Whilst it has been noted that any polyols supplementary to the random copolymer polyol may act as starter molecules, chain extenders and / or crosslinking agents, the present invention does not preclude the addition to the reaction mixture of non-hydroxyl compounds having at least one active hydrogen group and / or at least one water-stabilizing group. As is known in the art, chain extenders having at least two active hydrogen groups may be added to increase the chain length or to change the chemical characteristics of the polyurethane resin. And a compounds such as diethanolamine might be included as a capping agent for free isocyanate groups.

The above components may be reacted sequentially but it is preferred that the components are reacted simultaneously in the same pot. The reaction may also be catalysed by one or more suitable compounds, of which well-known examples include: i) amine compounds, such as trimethylamino-ethylpiperazine, triethylamine, tripropylamine, N-methylmorpholine, N-ethylmorpholine, triethylenediamine, tetramethylhexamethylene-diamine, dimethylcyclohexylamine, diazobicycloundecene, 1,3,5-tris(dimethylaminopropyl) hexahydro-s-triazine, and 2-ethylaziridine; ii) quaternary ammonium compounds, such as carboxylic acid salts of tertiary amines; iii) alkali metal salts of allyl glycidyl ether, polyalkylene glycol diglycidyl ether, styrene oxide, and the like; iv) lead compounds such as lead naphthenate and lead octoate; v) tin compounds such as dibutyltin diacetate and dibutyltin dilaurate; vi) alcoholate compounds such as sodium methoxide; vii) phenolate compounds such as potassium phenoxide; viii) metal halides, such as iron chloride, zinc chloride, zinc bromide, and tin chloride; and, ix) metal complex compounds, such as acetylacetone metal salts. These catalysts may be used alone or as a combination of two or more compounds. The amount of catalyst used is preferably from 0.001 to 15 parts by weight based on 100 parts by weight of polyol.

Where desirable, the reaction between the polyisocyanate and the random copolymer may be performed in the presence of a solvent. Examples of suitable solvents include, but are not limited to, water, benzene, toluene, xylene, mesitylene, chlorobenzene, o-dichlorobenzene, methylene chloride, chloroform, carbon tetrachloride, dichloroethane, trichloroethane, trichloroethylene, tetrachloroethane, tetrachloroethylene, tetrahydrofuran, 1,4-dioxane, N,N-dimethylformamide, N,N-dimethylacetamide, N-methyl-2-pyrrolidone, 1,3-dimethyl-2-imidazolidinone, dimethyl sulfoxide and tetramethylene sulfone.

Whilst there is in general no particular limitation on the reaction temperature, the reaction will generally be performed at a temperature in the range from room temperature to the boiling point of any solvent employed or otherwise under melting conditions at a temperature in the range from room temperature to 200° C.

The mixing of the random copolymer polyol, the polyisocyanates, any additional polyols and / or active hydrogen compounds and, if applicable additives, generates a reactive composition which must be processed as a coating before the crosslinking reaction progresses too far. In practice, the reactants are generally mixed immediately before their application to a substrate.

The polyurethane coating compositions are liquid at application temperature, said temperature typically being from 20°C to 130°C. It will be noted that at higher application temperatures, for example from 50°C to 130°C, the coating compositions may constitute a hot-melt. The liquid or melt might have a corresponding viscosity of from 500 to 70,000 centipoises, preferably from 1,000 to 30,000 cPs as determined at application temperature using a Brookfield Thermosel Viscometer Model DV-I using a number 27 spindle. The sensitivity of the substrate to high temperatures may determine which application temperature is applicable. Such physical characteristics as the viscosity and rate of set of the compositions may be varied to accommodate such application conditions.

There is no intention to limit the type of substrates which might be coated using the coating composition of the present invention. The polyurethane composition may be applied to any substrate which will withstand the application temperature of the adhesive. Exemplary substrates which might be so-coated could include: glass; acrylic resins; urethane resins; silicon resins; epoxy resins; fluororesins; polystyrene resins; polyester resins; polysulfone resins; polyacrylate resins; polyvinyl chloride resins; polyvinylidene chlorides; cycloolefin resins such as norbornene; polyolefin resins; polyimide resins; alicyclic polyimide resins; cellulose resins; polycarbonate (PC); polybutylene terephthalate (PBT); modified polyphenylene ether (modified PPE); polyethylene naphthalate (PEN); polyethylene terephthalate (PET); lactic acid polymers; acrylonitrile-butadiene-styrene (ABS) copolymers; and, acrylonitrile-styrene (AS) copolymers. Illustrative techniques usable for application of the polyurethane composition to the substrate, in particular for application in the form of a continuous surface film, include but are not limited to: roll coating; spray coating; T-die coating; knife coating; comma coating; curtain coating; dip coating; and, spin coating. The composition might also be applied by dispensing, ink-jet printing, screen printing or offset printing where more localized application of the coating composition is required or where application is required in a variety of continuous or intermittent forms such as a point, line, triangle, square, circle or arc.

Examples of adhesive application techniques are disclosed in *inter alia* SE 374,489, GB 2,134,420 and EP 745,433. It is further noted that the compositions of the present invention may be directly coated onto any substrate without transfer coating, although transfer coating is not precluded.

The curing reaction of the coating or adhesive coating composition continues on the surface of the substrate. Any free NCO groups of polyurethane polymer will react with available active hydrogen atoms, provided typically by ambient moisture. The specific addition, to either the substrate or the applied composition, of reactive compounds having free active hydrogen atoms - including but not limited to hydrogen sulfide, polyols and ammonia - is not precluded. In certain circumstances, it may be useful for such an addition to be affected at the bond line where the composition is used as an adhesive.

The precise formulation of the polyurethane coating or adhesive coating composition of the present invention will vary depending upon the specific end use: if desired the adhesive or sealant compositions of the present invention may also be formulated with conventional additives including but not limited to: plasticizers; compatible tackifiers; thermoplastic resins; catalysts; fillers for example silicates, talc, calcium carbonates, and, clays; anti-oxidants; carbon black; pigments; mercapto/silane adhesion promoters; and, stabilizers; and the like.

Plasticizers are carefully selected so as not to interfere with the efficacy of the other components, but will facilitate processing and increase flexibility of the composition.

Having regard to an adhesive coating composition in particular, the composition might further contain tackifying resins, including but not limited to: sucrose benzoate; styrenic copolymer resins; abietic acid and abietic acid esters; pimaric acid and pimaric acid esters; terpene resins, terpene-phenol resins; hydrocarbon resins such as those obtained by polymerizing cis- and trans-1,3-pentadiene, and isoprene and dicylopentadiene; and, a rosin or rosin derivative tackifier which is esterified, hydrogenated, maleated, formaldehyde adducted, and/or phenolated.

Further representative plasticizers and tackifying resins may also be found in US Patent Nos. 4,775,719, 4,808,255 and 4,820,368 (Markevka et al.) and US Patent No. 5,441,808 (Anderson et al.).

The present invention is also directed to a method for adhesively bonding two substrates - such as the above described substrates - by disposing between surfaces of said substrates an adhesive coating composition comprising the above defined polyurethane. Prior to disposing the adhesive coating composition between them, the substrate surfaces may optionally be subjected to a pre-treatment - such a corona treatment, a plasma treatment, or a primer treatment - as is known in the art.

The present invention does find particular utility where a first substrate to be adhered is made of a polyolefin containing material and may be provided in the form of a film or sheet. More particularly, that first substrate may be made of an olefin polymer or co-polymer having a softening point of from 75° to 150°C. Materials within this definition typically include: homopolymers of ethylene, propylene, and butylene; and, copolymers and terpolymers based on ethylene, propylene, or butylene. Equally certain copolymers and terpolymers of ethylene, propylene or butylene in combination with nonpolar or polar comonomers such as hexene, 4-methylpentene, octene, vinyl acetate, acrylic acid, methacrylic acid, butyl acrylate, isobutyl acrylate, ethyl acrylate, methyl acrylate, and methyl-methyl acrylate might also meet this definition.

For preparing packaging laminates, an exemplary first substrate may be a sheet or film made of either polypropylene or polyethylene having a density in excess of 0.925 g/cm³, that is medium or high density polyethylene.

In the example of the packaging laminates given above, the identified polyolefins will generally be adhesively bound to a second substrate made of a thermoplastic material. Generally those thermoplastic materials will possess certain functional characteristics: thermostability at temperatures in excess of 120°C. for example temperatures in the range of 120°C to 250°C. for prolonged periods of time, e.g. 15 to 60 minutes or more; and, thermo-formability into flexible films or other shapes, which shapes will be retained even after prolonged exposure at elevated temperatures. Typical thermoplastic materials which have been found to be suitable second substrates in the preparation of the laminates and packages according to the present invention include but are limited to: polycarbonates; polypentamethylene homo- and co-polymers; and, polysulfones.

In an exemplary lamination, the adhesive composition is applied - using one of the aforementioned techniques - to at least a portion of the polyolefin containing material sheet or film. Alternatively or additionally, the adhesive coating composition may be applied to at least a portion of the second substrate to be adhesively bonded to the polyolefin containing material. The thickness of the adhesive layer formed of the polyurethane adhesive composition - on the or each of the substrates to be bonded - will be determined by the purpose for which the adhesive layer is to be used; in typical circumstances, the thickness will be in the range from 10 µm to 5 mm.

The two substrates are then placed into contact under conditions suitable for forming an adhesive bond there-between and thus produce a bonded article. The bonded article may, for instance, be subjected to mechanical pressing. The bonded article may further be aged: conditions for aging after lamination can be appropriately determined by a skilled practitioner but illustrative conditions might include a temperature of from 20° to 80°C., relative humidity of from 50 to 90% RH, and an aging term of from 0.5 to 5 days.

The present invention will be further illustrated by the following Examples, without being limited thereto or thereby.

### Examples

### Manufacture of caprolactone/lactide random polymers

Polyester polyol A1, a polyester polyol according to the present invention, was prepared as follows. In a reactor equipped with a stirrer, a thermometer, a gas inlet and a condenser, 30 parts of caprolactone (Brand Persdorp), 70 parts of L-lactide (Puralact® B3), and 5,5 parts neopentyglycol (NPG) as initiator were charged. The temperature was raised to 150°C under normal pressure in a nitrogen atmosphere in order to melt the lactide. The temperature was subsequently raised to 180°C after which 100 ppm tin octoate as polymerization catalyst was added to the reaction mixture. The mixture was allowed to react for 6 hours and formed water was removed from the system.

The esterification reaction was conducted until desired acid- and hydroxyl values were obtained. The catalyst was inactivated by the addition of 150 ppm of phosphoric acid. The evaluation results of the obtained polyester polyol gave an acid value < 1 mg KOH/g and a hydroxyl value of 55 mg KOH/g. As all components were initially mixed and reacted, a random polyester polyol was obtained, having a number average molecular weight (Mn) of approximately 2000 g/mol.

In three further experiments, a polyester polyol (A2) in accordance with the present invention and two comparative polyols (C1 and C2) were prepared in a similar manner as described in the previous paragraph. However, in these experiments, either 10 parts (C1), 50 parts (A2) or 75 parts (C2) of caprolactone (Brand Persdorp) were used relative to 90 parts (C1), 50 parts (A2) and 25 parts (C2) of L-lactide (Puralact® B3). As all components were initially mixed and reacted, random polyester polyols were obtained, each having a number average molecular weight (Mn) of approximately 2000 g/mol.

In an additional comparative experiment (C3), a homo-polymer of caprolactone was prepared in an analogous manner. This polycaprolactide was also characterized by a number average molecular weight of approximately 2000 g/mol.

### Manufacture of polyurethane adhesive containing the above-described polyols and adhesion tests

From each of the manufactured polyols (A1 and A2) and comparative polyols (C1, C2 and C3), a polyurethane adhesive composition was made as follows. In a cup, 100 parts of the polyol, 11.2 parts of 1,4-butanediol and 46.5 parts of diphenylmethane diisocyanate (MDI) were mixed. The so-obtained mixture was applied on the surface of a plate made of a polyolefin material, like polypropylene or polyethylene with a surface area of 48,4 mm². Said surface may have been treated by means of a corona treatment before the polyurethane adhesive was applied. The substrate was subsequently pressed against the surface of a second substrate, which was preferably made also of a polyolefin material like polypropylene or polyethylene.

After having been cured for 2 hours at 110°C the maximum force at break of the adhesion was measured with an Instron 3366 apparatus. Using this apparatus, the adhesion test set up in accordance with ASTM D1002: the lap area was 48.4 mm² and the rate of displacement was 25mm/min.

Table 1 below shows the results of the lap shear adhesion tests applied on the substrates prepared as described in the previous paragraph.

**Table 1**

| **Polyol** | **% by wt. Lactoyl units in Polyol** | **Max load kPa** |
|---|---|---|
| C1 | 90 | 250 |
| A1 | 70 | 1400 |
| A2 | 50 | 1030 |
| C2 | 25 | 410 |
| C3 | 0 | 550 |

From the measured values results depicted in Table 1, it is concluded that the polyurethane comprising the polyol polyester according to the present invention shows superior adhesion properties. It is also noted that comparative polyol C1 yielded a very brittle polymer.

Similar good results are expected when using the polyurethane according to the present invention with substrates of other compounds from this class of polyolefins, like polyethylene and polyethylene propylene (not shown in detail).

It will be apparent to those skilled in the art, upon consideration of the specification, that various modifications can be made in the disclosed embodiments without departing from the scope of the invention. It is therefore intended that the embodiments and examples be considered illustrative only, with the true scope of the invention being indicated by the following claims.

## Claims

1. A coated substrate having on one surface thereof a coating composition comprising a polyurethane, said polyurethane comprising the reaction product of:
at least one isocyanate; and,
a polyol which is a random copolymer comprising from 30 to 85 wt.% lactoyl units and at least one further monomer.

2. The coated substrate according to claim 1, wherein said lactoyl units of said polyol are derived from optically pure lactic acid or optically pure lactide, preferably from L-lactic acid or L-lactide.

3. The coated substrate according to claim 1 or claim 2, wherein said at least one further monomer of said polyol comprises:
a dicarboxylic acid selected from the group comprising alkyl dicarboxylic acids having a total of 2 to 16 carbons atoms and aryl dicarboxylic acids having a total of from 8 to 16 carbon atoms; and,
a diol having from 2 to 10 carbon atoms.

4. The coated substrate according to claim 3, wherein said at least one further monomer comprises:
a dicarbxoylic acid selected from glutaric acid, adipic acid, pimelic acid, succinic acid, sebacic acid, azelaic acid, malonic acid, terephthalic acid, phthalic acid and, isophthalic acid, preferably adipic acid; and,
a diol selected from ethylene glycol, propylene glycol, 1,3-propane diol, 1,2-butane diol, 1,3-butane diol, 1,4-butane diol, 2,3-butane diol, neopentyl glycol, hexamethylene glycol and cyclohexane dimenthynol, preferably ethylene glycol or neopentyl glycol.

5. The coated substrate according to claim 1 or claim 2, wherein said lactoyl units of said polyol are derived from lactide and said at least one further monomer of said polyol is selected from the group consisting of: glycolide; ε-caprolactone; para-dioxanone; trimethylene carbonate; 1,4-dioxepan-2-one; and, 1,5 dioxepan-2-one.

6. The coated substrate according to claim 5, wherein said at least one further monomer of said polyol comprises ε-caprolactone.

7. The coated substrate according to claim 6, wherein said polyol is a hydroxyl-terminated caprolactone-lactide random copolymer in which the weight ratio of polymerized lactide to polymerized ε-caprolactone is from 80:20 to 40:60.

8. The coated substrate according to any one of claims 1 to 7, wherein said polyol has a number average molecular weight (Mn) of from 800 to 5000, preferably from 800 to 3500 g/mol.

9. The coated substrate according to claim 1, wherein said polyol is a hydroxyl-terminated caprolactone-lactide random copolymer having a number average molecular weight of from 800 to 3500g/mol and in which the molar ratio of polymerized lactide to polymerized ε-caprolactone is from 80:20 to 40:60.

10. The coated substrate according to any one of claims 1 to 9, wherein said substrate is made of a polyolefin containing material.

11. The coated substrate according to any one of claims 1 to 10, wherein said substrate is a sheet or a film on one surface of which the coating composition is provided as a layer.

12. A method of forming a coated substrate comprising:
providing a substrate; and,
applying a coating composition to at least a portion of at least one surface of said substrate, wherein said coating composition comprises a polyurethane, said polyurethane comprising the reaction product of:
at least one isocyanate; and,
a polyol which is a random copolymer comprising from 10 to 90 wt.% lactoyl units and at least one further monomer.

13. A method for adhesively bonding two substrates comprising the steps of:
providing a first substrate being a film or sheet made of a polyolefin containing material and a second substrate;
applying an adhesive coating composition to at least a portion of at least one surface of said first substrate and / or at least a portion of at least one surface of said second substrate; and,
contacting the first and second substrates under conditions suitable for forming an adhesive bond there-between,
wherein said adhesive coating composition comprises a polyurethane, said polyurethane comprising the reaction product of:
at least one isocyanate; and
a polyol which is a random copolymer comprising from 30 to 85 mol.% lactoyl units and at least one further monomer.

14. The method according to claim 13, wherein said adhesive coating composition is heated to a temperature of from 50 to 130°C. to be melted before and / or during application.

15. An adhesive bonded article comprising first and second substrates obtained by the method defined in claim 13 or claim 14.

16. The adhesive bonded article according to claim 15 having a lap shear strength of greater than 600 kPa as measured in accordance with ASTM D1002 (25 mm / min).
